# EUROPÄISCHE PATENTSCHRIFT

(11) **EP 0 727 350 B1**
(45) Veröffentlichungstag und Bekanntmachung des Hinweises auf die Patenterteilung: **17.11.1999**
(21) Anmeldenummer: 96102268.8
(22) Anmeldetag: 15.02.1996
(51) Int. Cl.: B64C 27/625, A63H 27/133

(54) **Drehflügler mit Kreiselstabilisierung des Rotors**
Rotorcraft with gyroscopic rotor stabilisation
Giravion avec stabilisation gyroscopique du rotor

(30) Priorität: 15.02.1995 DE 29502393 U; 07.07.1995 DE 19524793
(43) Veröffentlichungstag der Anmeldung: 21.08.1996
(73) Patentinhaber: Ziegler, Bruno, 97535 Wasserlosen (DE)
(72) Erfinder: Ziegler, Bruno, 97535 Wasserlosen (DE)
(74) Vertreter: Pöhner, Wilfried Anton, Dr.

(56) Entgegenhaltungen:
- DE-A- 2 461 122
- DE-U- 29 502 541
- US-A- 2 646 848
- US-A- 4 741 672
- US-A- 4 958 786

## Beschreibung

Die Erfindung bezieht sich auf einen Drehflügler mit am Zentralstück eines drehbaren Rotorkopfes befestigten Tragflügeln, die den Rotor bilden und deren Anstellwinkel gegen die Drehebene des Rotors durch Steuerstangen verstellbar ist, sowie mit einer Stabilisierungsstange, die um eine parallel der Anstellachse des Tragflügels verlaufende Achse drehbar am Rotorkopf befestigt ist, und deren Längsachse parallel der Drehebene des Rotors ausgerichtet ist, sowie mit einem Mischelement, an dem Tragflügel, Steuerstangen und Stabilisierungsstange unmittelbar oder über Übertragungsvorrichtungen in der Weise angreifen, daß der Kippwinkel der Stabilisierungsstange gegen die Drehebene des Rotors den Anstellwinkel des Tragflügels gleichsinnig verändert.

Drehflügelflugzeuge, insbesondere Hubschrauber, werden durch einen drehbaren Rotor getragen. Zur Veränderung des Auftriebs und Steuerung ist der Anstellwinkel der Tragflügel, d.h. Rotorblätter, gegen die Drehebene des Rotors durch Steuerstangen verstellbar, wobei die Verstellung in aller Regel durch eine Taumelscheibe erfolgt, so daß der momentane Anstellwinkel eines Tragflügels von seiner Position während des Rotorumlaufs abhängig geregelt wird. Auf diese Weise ist beispielsweise eine Verkippung des Drehflüglers um eine beliebige, horizontale Achse möglich. Die Steuerstangen greifen unmittelbar am Rotorblatt oder an einem Blatthalter an.

Bei allen Flugzeugen besteht das Problem einer Stabilisierung der Fluglage gegen unvorhergesehene Einflüsse, etwa böigen Wind. An Drehflügler werden in dieser Beziehung besondere Anforderungen im Hinblick auf die Aufgabe gestellt, an festen Punkten in der Luft zu schweben oder an einem eng begrenzten Ort zu landen. Befindet sich der Flugzeugführer nicht in der Maschine, z.B. bei ferngesteuerten Industriehubschraubern oder Modellhubschraubern, kann er Flugunruhen nicht unmittelbar spüren, sondern muß sie aus dem Bedienungsabstand erkennen und kann daher nur verspätet und auf große Auslenkungen aus der Fluglage reagieren. Für eine hinreichende Lagestabilität ist somit ein aufwendiges Flugtraining erforderlich, das gerade Führer ferngesteuerter Drehflügler vielfach nicht besitzen.

Zwecks einer automatischen Stabilisierung der Fluglage sind Stabilisierungsstangen bekannt, durch die der Anstellwinkel der Tragflügel bei einer Kippung des Rotors in der Weise variiert wird, daß der veränderte Auftrieb der Rotorblätter der Kippbewegung entgegen wirkt. Die Stabilisierungsstange ist um eine Achse drehbar am Rotorkopf befestigt, die parallel der Anstellachse des Tragflügels verläuft. Daher stellt sich ihre Längsachse bei drehendem Rotor aufgrund der wirkenden Fliehkräfte im Gleichgewicht parallel dessen Drehebene ein. Im physikalischen Sinne ist die Stabilisierungsstange ein Kreisel, der auch bei einer Verkippung der Lage des Drehflüglers, etwa infolge einer Böe, seine Lage raumfest beizubehalten sucht und sich daher gegenüber der Drehebene des Rotors entsprechend dem Kippwinkel des Fluggerätes einstellt. Über ein Gestänge wird der Anstellwinkel des Tragflügels im gleichen Drehsinn verändert, wodurch die Auftriebsverhältnisse des Rotors der Verkippung entgegen wirken. Mit zunehmender Annäherung an die ursprüngliche Fluglage nimmt die Änderung des Anstellwinkels wieder ab, so daß nur ein mäßiges Gegensteuern des Piloten erforderlich ist.

In der Regel erfolgt die Einwirkung der Steuerstangen und der Stabilisierungsstangen auf den Tragflügel über ein als Hebel wirkendes Mischelement, mit dem Flügel und Stangen drehbar verbunden sind, und das ihre Wirkung in geeigneter Weise abstimmt. Mischelement und Steuerstange sind dabei durch parallel der Rotorachse verlaufende Übertragungsstangen verbunden. Derartige Mischelemente sind z. B. aus dem Fachbuch "Hubschrauber ferngesteuert" von Dieter Schlüter, Neckar-Verlag, Villingen-Schwenningen, bekannt, so z. B. das Bell-Hiller Mischelement, das sowohl am Blattverstellarm oder an der Stabilisierungsstange oder aber extern durch Gestänge verbunden sein kann. Weiterhin ist es bekannt, an der Stabilisierungsstange endseitig Stabilisierungsmassen oder -flügel anzubringen, um ihre Trägheit bzw. den Luftwiderstand und damit ihre Wirkung zu erhöhen, ohne daß das Gewicht signifikant zunimmt.

Die im Stande der Technik gebräuchlichen Stabilisierungsstangen gleichen Kippungen der Fluglage nur unvollständig aus, d. h. sie vermindern zwar die Notwendigkeit, Lageveränderungen entgegen zu steuern, heben sie aber nicht auf. Während ihre Wirkung bei gutem Wetter vielfach ausreichend ist, erfordert die Führung des Fluggerätes bei schwierigen Lagen, etwa Sturmböen, weiterhin ein erhebliches Flugtraining des Piloten, insbesondere dann, wenn eine hohe Präzision der Steuerung notwendig ist. Ferner haben herkömmliche Stabilisierungsstangen den Nachteil, daß sie unerwünschten Bewegungen des Fluggerätes in Richtung der Rotorachse, speziell dem gefährlichen Durchsacken der Maschine, nicht entgegen wirken.

Vor diesem Hintergrund hat sich die Erfindung zur Aufgabe gestellt, die Rotorstabilisierung in der Weise zu verbessern, daß sich die Lagestabilität des Drehflüglers erheblich erhöht und auch unerwünschte Bewegungen in Richtung der Rotorachse verhindert werden.

Im folgenden werden Lösungen der beiden Teile der Aufgabe erläutert, die unabhängig voneinander einsetzbar sind. Da eine mechanische Stabilisierung stets auch einer gewünschten Bewegung in der zu stabilisierenden Richtung in gewissem Maße entgegenwirkt, kann es sich für spezielle Einsatzzwecke des Fluggerätes anbieten, nur eine der beschriebenen Stabilisierungen einzusetzen, um die zur Rotorsteuerung notwendigen Kräfte zu verringern. Im allgemeinen sind jedoch geeignete Kombinationen der Lösungen zweckmäßig.

Eine Lösung der erfindungsgemäßen Aufgabe besteht darin, daß das Verhältnis zwischen Kippwinkel und Änderung des Anstellwinkels durch eine Übersetzungsvorrichtung vergrößert wird.

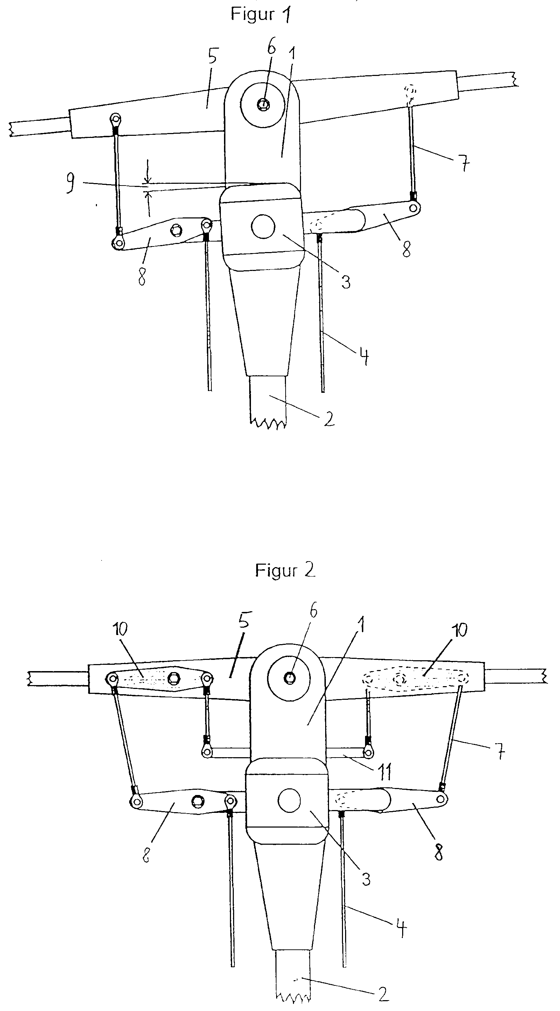

Bei einer herkömmlichen Rotorstabilisierung wird die Kippung der Stabilisierungsstangen durch etwa parallel der Rotorachse verlaufende Übertragungsstangen auf die Mischhebel übertragen (vergleiche Figur 1 der Zeichnungsbeschreibung). Infolgedessen stellt sich das aus dem Tragflügel bzw. seinem Halter und den damit verbundenen Mischhebeln bestehende System parallel der Stabilisierungsstange ein, d.h. wird um den gleichen Winkel verkippt. Die Lage der Mischhebel wird jedoch durch die Endpunkte der Steuerstangen festgelegt, so daß ihr Winkel gegen die Drehebene des Rotors größer ist, als der Winkel, den die Stabilisierungsstange einnimmt. Zum Ausgleich verändert sich der Anstellwinkel des Tragflügel in geringerem Maße. Änderungen des Anstellwinkels des Flügels im Bereich des Kippwinkels der Stabilisierungsstange lassen sich allenfalls durch eine Verkürzung der Mischhebel erreichen. Diese Maßnahme würde die Steuerung jedoch wesentlich erschweren, da bei jeder Änderung des Anstellwinkels die kreiselstabilisierte Ausrichtung der Stabilisierungsstange zu ändern wäre. Aus diesem Grunde wird vorgeschlagen, das Übersetzungsverhältnis zwischen dem Kippwinkel der Stabilisierungsstange und der Änderung des Anstellwinkels des Tragflügels durch eine Übersetzungsvorrichtung zu vergrößern. Auf diese Weise lassen Änderungen des Anstellwinkels im Bereich des Kippwinkels der Stabilisierungsstange und darüber hinaus erreichen.

Durch die erfindungsgemäße Übersetzungsvorrichtung läßt sich die Lagestabilität des Rotorsystems derart steigern, daß eine Verkippung des Fluggerätes durch äußere Einflüsse nahezu vollständig verhindert wird. Damit wird ein Einsatz des Drehflüglers auch unter schwierigsten Flugbedingungen möglich. Wird die Länge der Mischhebel nicht verändert, bleibt die Steuerfolgsamkeit des Fluggerätes gleich, so daß eine leichtgängige und präzise Kontrolle gewährleistet bleibt.

Bei einer vorteilhaften Ausgestaltung der Erfindung, die sich durch einen sehr einfachen und preisgünstigen Aufbau auszeichnet, erfolgt die Vergrößerung des übersetzungsverhältnisses durch einen Umlenkhebel. Er ist am Zentralstück des Rotorkopfes, an der Stabilisierungsstange sowie am Mischhebel drehbar befestigt, wobei die Befestigung durch Übertragungsstangen oder unmittelbar erfolgt. Der Hebel ist nicht notwendig von gerader Gestalt, wobei gebogene oder gewinkelte Hebel die unmittelbare Befestigung an allen Bauelementen gestatten. Damit der Umlenkhebel eine Vergrößerung des Übersetzungsverhältnisses bewirkt, ist es selbstverständlich notwendig, daß der Befestigungspunkt am Rotorkopf vom Drehpunkt der Stabilisierungsstange beabstandet ist und die Verbindung mit dem Mischelement auf der - bezogen auf die Befestigung an der Stabilisierungsstange - gegenüberliegenden Seite des Umnlenkhebels erfolgt.

Eine alternative Ausführung der Übersetzungsvorrichtung besteht in einem Zahngetriebe. Dabei ist die Drehachse der Stabilisierungsstange starr mit einem Zahnrad oder einem Segment eines Zahnrades verbunden. Die Übertragung der Bewegung auf das Mischelement, das zweckmäßig auch als Zahnrad oder Zahnradsegment gestaltet ist, erfolgt durch ein Zahnrad- oder Zahnstangengetriebe, das im einfachsten Fall lediglich aus dem Mischelement und dem Zahnrad auf der Achse der Stabilisierungsstange besteht. Das Übertragungsverhältnis läßt sich durch geeignete Größen der Getriebeelemente in einem weiten Bereich einstellen. Ist ein Durchmesser des an der Stabilisierungsstange befestigten Zahnrades erforderlich, der größer als der Abstand zum Drehpunkt des Tragflügels ist, läßt sich ein hohles Zahnrad oder -segment mit innenliegendem Zahnkranz verwenden.

Eine Minimierung der Rückwirkung der Kreiselstabilisierung auf gewünschte Änderungen der Fluglage läßt sich durch eine Veränderung des Anstellwinkels auf elektromechanischem Wege erzielen. Zu diesem Zweck wird der Kippwinkel der Stabilisierungsstange durch einen Sensor erfaßt, der mit einer Steuereinheit verbunden ist. Die Steuereinheit bewirkt ihrerseits über Stellglieder, beispielsweise einen Elektromotor oder -magneten, eine Verstellung der Steuerstangen. Dabei können die Stellglieder unmittelbar oder über die Taumelscheibe einwirken. Das Mischelement wird in diesem Fall zweckmäßig durch eine elektronische Vorrichtung realisiert, die die Steuervorgänge des Drehflüglers über Sensoren erfaßt und ein Entgegenwirken der Stellglieder unterbindet.

Allen erläuterten Ausgestaltungen der Erfindung ist gemeinsam, daß das Übersetzungsverhältnis flexibel veränderbar und an unterschiedliche Rotorsysteme anpaßbar ist. Die Anpassung erfolgt je nach Ausführung durch Veränderung der Befestigungspunkte des Umlenkhebels, der Größe und Anzahl der Zahnräder bzw. der Einstellung oder Programmierung der Steuereinheit. Alle Ausführungen lassen sich sowohl für oberhalb als auch unterhalb der Rotorebene angeordnete Stabilisierungsstangen verwenden.

Die Aufgabe einer Stabilisierung gegenüber Bewegungen des Fluggerätes in Richtung der Rotorachse wird erfindungsgemäß dadurch gelöst, daß daß jedem Tragflügel des Rotors eine Stabilisierungsstange zugeordnet ist, die am Zentralstück des Rotorkopfes um eine Achse, die außerhalb des Schwerpunktes der Stabilisierungsstange verläuft, drehbar befestigt ist.

Während eine herkömmliche Stabilisierungsstange zur Rotorachse symmetrisch ist und jeweils auf ein Paar von auf gegenüberliegenden Seiten des Rotors angeordneten Tragflügeln wirkt, ist bei dem vorgeschlagenen Drehflügler jedem Tragflügel des Rotors eine Stabilisierungsstange zugeordnet. Ferner weisen die Stabilisierungsstangen bezüglich ihres Drehpunktes keinen symmetrischen Aufbau auf, d.h. die Drehachse der Stabilisierungsstange verläuft, bevorzugt mit Abstand, außerhalb des Schwerpunktes. Die Symmetrie des Rotorkopfes zur Vermeidung von Unwuchten wird dabei durch die der Symmetrie der Tragflügel entsprechende Anordnung der Stabilisierungsstangen erreicht. Im Hinblick auf eine Verkippung des Rotors wirken die Stabilisierungsstangen wie herkömmliche Ausführungen, wobei ihre Zuordnung zu jeweils unterschiedlichen Tragflügeln im allgemeinen für die Funktion bedeutungslos ist. Da alle Stabilisierungsstangen bei Betrieb des Rotors in der gleichen Ebene kreisen, stellen sie sich bei einer Verkippung des Rotors in gleicher Weise gegenüber dessen Ebene ein, so daß der Anstellwinkel der Tragflügel wie im Fall einer durchgehenden Stabilisierungsstange verändert wird. Bei einer Bewegung des Fluggerätes in Richtung der Rotorachse, wie es bei einem Durchsacken auftritt, ist das Verhalten der Stabilisierungsstangen jedoch von einem herkömmlichen System unterschiedlich. Aufgrund der Aufhängung außerhalb des Schwerpunktes führt die Bewegung zu einer Verkippung aller Stabilisierungsstangen, die jeweils in gleicher Weise auf die Tragflügel des Rotors übertragen wird, d.h. der Anstellwinkel aller Rotorblätter erhöht bzw. erniedrigt sich. Beispielsweise werden bei einem Absacken des Hubschraubers die Rotorblätter steiler angestellt, so daß sich ihr Auftrieb erhöht und das Fluggerät abgefangen wird. Zweckmäßig wird das System gemeinsam mit einer elektronischen Drehzahlregelung des Rotors eingesetzt, der verhindert, daß die Drehzahl durch den mit größerem Anstellwinkel erhöhten Luftwiderstand abnimmt und sich die Zunahme des Auftriebs vermindert. Weiterhin besteht ein Vorteil der erfindungsgemäßen Stabilisierungsstange darin, daß sie sich auch bei Rotoren mit ungerader Flügelzahl einsetzen läßt.

In einer vorteilhaften Weiterbildung der Erfindung wird das Übersetzungsverhältnis zwischen dem Kippwinkel der Stabilisierungsstangen und der Änderung des Anstellwinkels der Tragflügel durch den Abstand der Drehachse der Stabilisierungsstange zur Drehachse des Rotors gegeben, wobei der Angriffspunkt der Verbindung zum Mischelement unverändert bleibt. Die Variationsbreite möglicher Übersetzungsverhältnisse läßt sich dabei vergrößern, indem das Zentralstück des Rotorkopfes mit horizontalen Verlängerungen versehen wird, beispielsweise einem Querbalken, an dem die Drehachse der Stabilisierungsstange angebracht ist. Befindet sich der Drehpunkt der Stabilisierungsstange nahe am Verbindungspunkt mit dem Mischelement, so bewirkt eine Verkippung der Stabilisierungsstange eine geringere Änderung des Anstellwinkels des Tragflügels als bei einem großen Abstand. Alternativ läßt sich das Übersetzungsverhältnis auch durch die oben beschriebenen Vorrichtungen, also Umlenkhebel, Zahngetriebe oder eine elektromechanische Übertragung verändern.

Weitere Einzelheiten, Merkmale und Vorteile der Erfindung lassen sich dem nachfolgenden Beschreibungsteil entnehmen, in dem anhand der Zeichnung Ausführungsbeispiele der Erfindung näher erläutert sind. Die Zeichnung zeigt in prinzipienhafter Darstellung
- Figur 1: Ansicht eines Rotorkopfes im Stande der Technik
- Figur 2: Ansicht eines erfindungsgemäßen Rotorkopfes mit durch Umlenkhebel vergrößerter Übersetzung
- Figur 3: Ansicht des Rotorkopfes nach Figur 2 bei einer Verkippung des Fluggerätes
- Figur 4: Alternative Ausgestaltung des Rotorkopfes
- Figur 5: Erfindungsgemäßer Rotorkopf mit zwei asymmetrischen Stabilisierungsstangen
- Figur 6: Rotorkopf mit außermittig befestigten Stabilisierungsstangen
- Figur 7: Rotorkopf mit entgegengesetzt außermittig befestigten Stabilisierungsstangen
- Figur 8: Rotorkopf mit asymmetrischen Stabilisierungsstangen und durch Umlenkhebel vergrößerter Übersetzung
- Figur 9: Alternative Ausgestaltung eines Rotorkopfes mit außermmittig befestigten Stabilisierungsstangen

In Figur 1 ist ein Rotorkopf dargestellt, wie er im Stande der Technik Verwendung findet. Er besteht aus einem Zentralstück (1), das durch die Rotorwelle (2) in Drehung versetzbar ist, und an dem Tragflügelhalter (3), an denen die Rotorblätter befestigt sind, um eine horizontale Achse drehbar angebracht sind. Auf diese Weise läßt sich der Anstellwinkel der Tragflügel durch Steuerstangen (4), die in der Regel mit einer Taumelscheibe verstellbar sind, variieren, so daß sich der Auftrieb ändert. Zur Stabilisierung der Fluglage ist der Rotorkopf mit einer Stabilisierungsstange (5) ausgestattet, die um eine parallel der Drehachse des Tragflügelhalters (3) verlaufende Achse (6) drehbar ist, und deren Bewegungen durch Übertragungsstangen (7) sowie Mischhebel (8) den Tragflügelhalter (3) verstellen.

Die Wirkungsweise der Stabilisierung ist wie folgt: Bei drehendem Rotor wirkt die Stabilisierungsstange als Kreisel, der bei Verkippung des Fluggerätes seine raumfeste Lage beibehält, d.h. der Winkel der Stabilisierungsstange (5) gegenüber Rotorzentralstück (1) und -welle (2) verändert sich. Diese Winkeländerung bewirkt eine Änderung des Anstellwinkels der Tragflügel, so daß sich ihr Auftrieb ändert und der Verkippung des Systems entgegenwirkt. Ist die ursprüngliche Fluglage wieder erreicht und damit die Stabilisierungsstange wieder parallel der Drehebene des Rotors ausgerichtet, nehmen die Tragflügel wieder die durch die Steuerstangen (4) eingestellten Anstellwinkel ein. Auf diese Weise wird es dem Piloten erleichtert, störende Einflüsse auf die Fluglage, etwa Windböhen, auszugleichen.

Die Funktion der Mischhebel (8) besteht darin, die Bewegung der Steuerstangen (4) von der Stabilisierungsstange (5) zu entkoppeln, so daß gewünschte Verstellungen der Rotorblätter, etwa zum Manövrieren des Fluggerätes, möglich bleiben, ohne durch die in ihrer Lage kreiselstabilisierte Stabilisierungsstange (5) unterbunden zu werden. Die Übertragung der Bewegungen durch die Mischhebel (8) hat jedoch zur Folge, daß der Winkel (9), um den die Rotorblätter verstellt werden, stets geringer ist, als die Verkippung der Stabilisierungsstange (5).

Flugtechnisch ist es jedoch von Vorteil, wenn bereits bei geringen Verkippungen eine wesentlich stärkere Gegensteuerung erfolgt, um Störungen der Fluglage bereits im Ansatz zu vermeiden, d.h. nicht entstehen zu lassen, und eine wesentlich bessere Stabilisierung zu erreichen.

Daher wird das Übersetzungsverhältnis zwischen dem Kippwinkel der Stabilisierungsstange (5) gegen die Drehebene des Rotors und dem Winkel (9), um den die Rotorblätter verkippt werden, zweckmäßig durch eine Übersetzungsvorrichtung vergrößert. Figur 2 zeigt eine vorteilhafte Ausgestaltung der Erfindung unter Verwendung von Umlenkhebeln (10). Sie sind mit einer starr am Zentralstück (1) des Rotors befestigten Stange (11) sowie der Stabilisierungsstange (5) verbunden und stellen deren Verbindung mit den Übertragungsstangen (7) dar. Dabei sind alle Befestigungen um parallel der Achse (6) verlaufende Drehachsen beweglich.

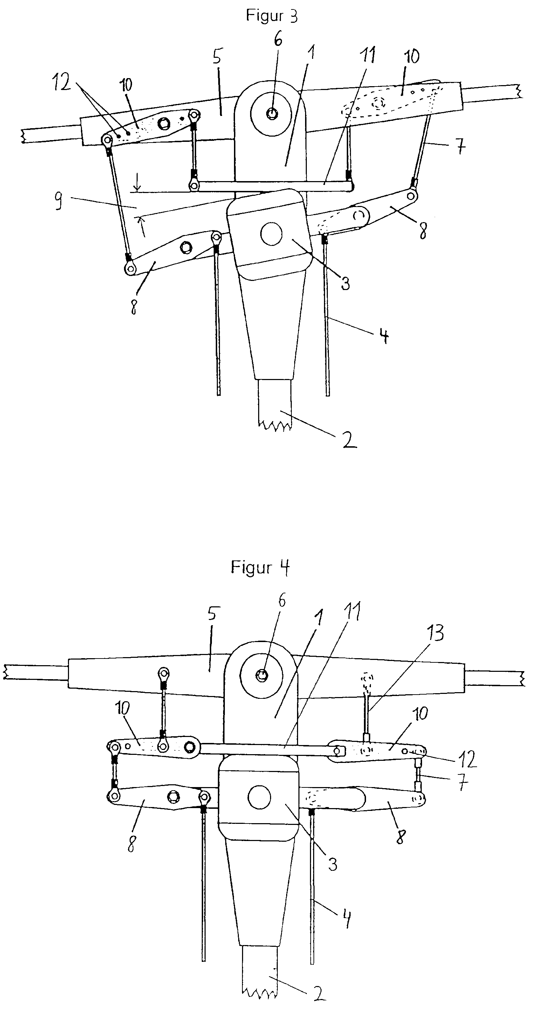

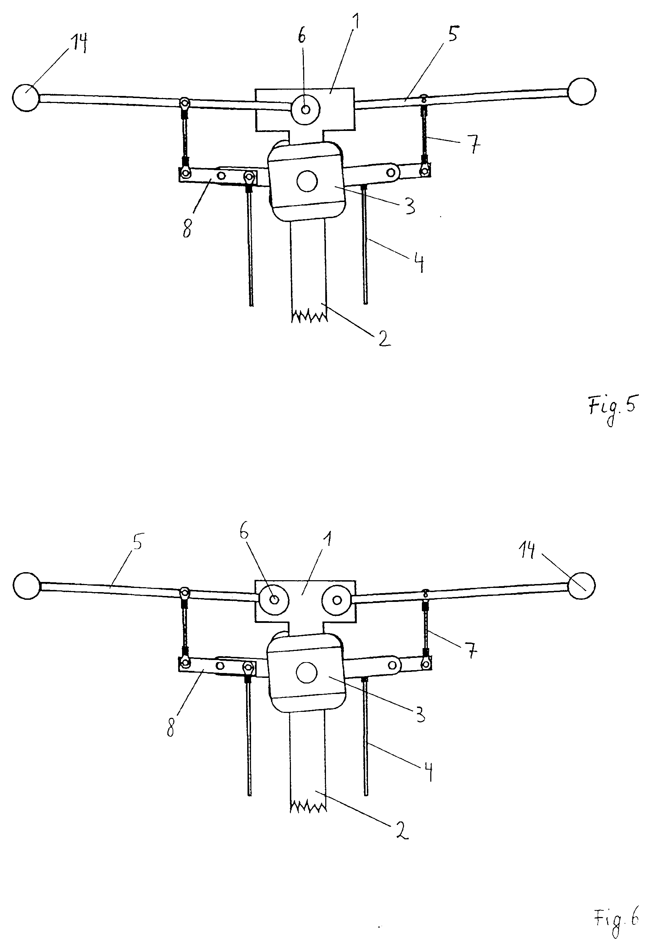

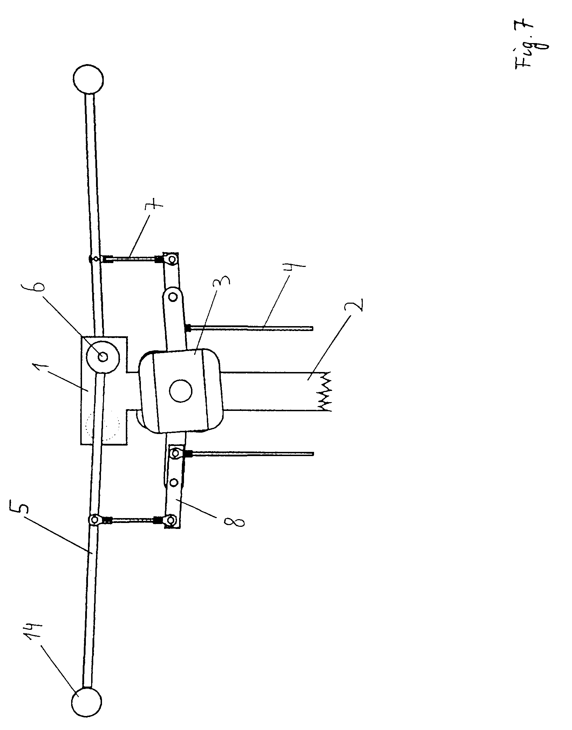

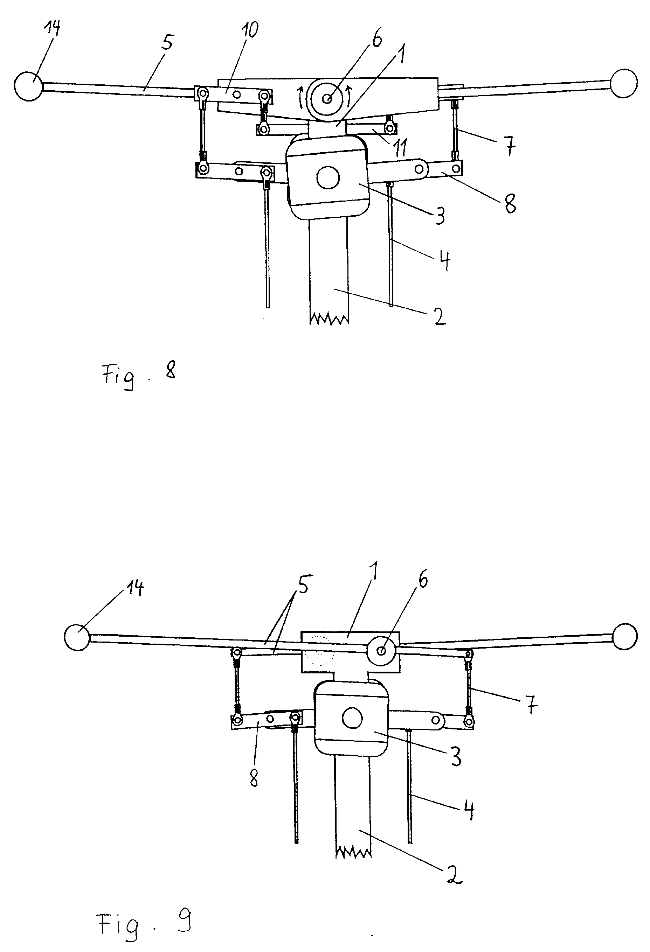

In Figur 3 ist die Funktion der Umlenkhebel (10) wiedergegeben. Infolge des horizontalen Abstandes der Befestigungen an der Stange (11) von der Achse (6) der Stabilisierungsstange wird deren Bewegung durch den Hebelarm der Umlenkhebel (10) vergrößert auf die Mischhebel (8) übertragen. Daher werden die Tragflügel bei vorgegebener Kippung der Stabilisierungsstange (5), d.h. des gesamten Fluggerätes, um einen wesentlich größeren Winkel (9) verstellt, als es bei dem herkömmlichen Rotorkopf in Figur 1 der Fall ist. Damit wird die Stabilisierung wesentlich verbessert und ermöglicht eine sichere Beherrschung des Fluggerätes auch unter schwierigsten Bedingungen. Öffnungen (12) der Mischhebel gewähren die Möglichkeit unterschiedicher Befestigungspunkte und somit einer Veränderung des Übersetzungsverhältnisses, z.B. für eine Anpassung an unterschiedliche Typen von Drehflüglern oder Rotoren.

Im Sinne der Erfindung ist es unerheblich, an welcher Position zwischen Stabilisierungsstange (5) und Mischhebeln (8) die Umlenkhebel (10) angeordnet sind, d.h. welche ihrer Aufhängungen unmittelbar oder durch Gestänge erfolgen. Figur 4 gibt eine entsprechende Abwandlung wieder, bei der die Umlenkhebel (10) unmittelbar mit der Stange (11) und durch Übertragungsstangen (13) mit der Stabilisierungsstange (5) unter Verkürzung der Übertragungsstangen (7) verbunden sind. Unter Verwendung gewinkelter Umlenkhebel (10) ist auch eine unmittelbare Verbindung mit der Stabilisierungsstange (5), dem Zentralstück (1) des Rotors, bzw. der Stange (11), sowie dem Mischhebel (8) denkbar.

Um eine Stabilisierung der Fluglage gegenüber unerwünschten Bewegungen in Richtung der Rotorwelle (2) zu ermöglichen, ist es notwendig, eine Stabilisierungsstange (5) zu verwenden, deren Drehachse (6) außerhalb des Schwerpunktes verläuft. Die zur Vermeidung von Unwuchten notwendige Symmetrie des Rotorkopfes wird dabei erreicht, indem jedem Tragflügelhalter (3) eine endseitig am Zentralstück (1) des Rotors befestigte Stabilisierungsstange (5) zugeordnet wird, wie es Figur 5 zeigt. Infolge der Massenträgheit und des Luftwiderstandes, die sich durch endseitig angebrachte Stabilisierungsmassen (14) und -flügel erhöhen lassen, stellen sich die Stabilisierungsstangen (5) bei Bewegungen des Fluggerätes in Richtung der Rotorwelle (2) im Winkel zu ihr ein. Im Beispiel eines Absackens nach unten bilden sie ein nach oben geöffnetes V, so daß sich der Anstellwinkel der Tragflügelhalter (3) infolge der Übertragung der Bewegung mittels der Mischhebel (8) vergrößert und sich der Auftrieb des Rotors erhöht. Umgekehrt vermindert er sich bei einer Bewegung nach oben. Bei einer Verkippung des Rotors wirken die Stabilisierungsstangen (5) wie die einteilige Ausführung in Figur 1, da sich beide im gleichen Winkel zur Drehebene des Rotors einstellen.

Durch eine Anbringung der Drehachsen (6) der Stabilisierungsstangen (5) außerhalb der Drehachse des Rotors läßt sich bei unveränderten Positionen der Übertragungsstangen (7) das Übersetzungsverhältnis variieren. Dabei ist sowohl eine Verkleinerung, wie in Figur 6 gezeigt, als auch eine Vergrößerung des Übersetzungsverhältnisses (Figur 7) erreichbar. Selbstverständlich sind auch Umlenkhebel (10) zur Veränderung des Übersetzungsverhältnisses einsetzbar, wie Figur 8 zeigt. Die Funktion der übrigen Bauteile ist jeweils wie oben beschrieben.

Die Darstellung in Figur 9 zeigt Stabilisierungsstangen, die auf der im Vergleich zu den vorhergehenden Beispielen gegenüberliegenden Seite der Drehachse (6) an den Übertragungsstangen (7) angreifen, d.h. die Wirkung erfolgt auf das jeweils andere Rotorblatt. Die Drehrichtung des Rotors ist in diesem Beispiel zu den übrigen Ausführungen entgegengesetzt.

Im Ergebnis entsteht auf diese Weise eine Stabilisierung des Rotors eines Drehflüglers, insbesondere eines ferngesteuerten Hubschraubers, die seine Flugeigenschaften wesentlich verbessert und die Steuerung, speziell unter schwierigen Bedingungen, erheblich erleichtert.

## Patentansprüche

1. Drehflügler mit am Zentralstück (1) eines drehbaren Rotorkopfes befestigten Tragflügeln, die den Rotor bilden und deren Anstellwinkel gegen die Drehebene des Rotors durch Steuerstangen (4) verstellbar ist, sowie mit einer Stabilisierungsstange (5), die um eine parallel der Anstellachse des Tragflügels verlaufende Achse (6) drehbar am Rotorkopf befestigt ist, und deren Längsachse parallel der Drehebene des Rotors ausgerichtet ist, sowie mit einem Mischelement zur Entkoppelung der Bewegung der Steuerstangen (4) von der Stabilisierungsstange (5), an dem Tragflügel, Steuerstangen und Stabilisierungsstange (5) unmittelbar oder über Übertragungsvorrichtungen in der Weise angreifen, daß der Kippwinkel der Stabilisierungsstange (5) gegen die Drehebene des Rotors den Anstellwinkel (9) des Tragflügels gleichsinnig verändert, **dadurch gekennzeichnet,** daß das Verhältnis zwischen Kippwinkel und Änderung des Anstellwinkels durch eine Übersetzungsvorrichtung vergrößert wird.

2. Drehflügler nach Anspruch 1, **dadurch gekennzeichnet,** daß das Mischelement ein Mischhebel (8) ist und die Übersetzungsvorrichtung einen Umlenkhebel (10) umfaßt, der drehbar mit dem Zentralstück (1) des Rotorkopfes, der Stabilisierungsstange (5) und dem Mischhebel (8) verbunden ist.

3. Drehflügler nach Anspruch 1, **dadurch gekennzeichnet**, daß ein Zahnrad oder Segment eines Zahnrades starr mit der Drehachse (6) der Stabilisierungsstange (5) verbunden ist und die Übersetzungsvorrichtung ein Zahnrad- oder Zahnstangengetriebe ist.

4. Drehflügler nach Anspruch 1, **dadurch gekennzeichnet**, daß ein Sensor, der mit einer Steuereinheit verbunden ist, den Kippwinkel der Stabilisierungsstange (5) erfaßt und die Steuereinheit über Stellglieder eine Verstellung der Steuerstangen (4) bewirkt.

5. Drehflügler nach Anspruch 1, **dadurch gekennzeichnet**, daß jedem Tragflügel des Rotors eine Stabilisierungsstange (5) zugeordnet ist, die am Zentralstück (1) des Rotorkopfes um eine Achse (6), die außerhalb des Schwerpunktes der Stabilisierungsstange (5) verläuft, drehbar befestigt ist.

6. Drehflügler nach Anspruch 5, **dadurch gekennzeichnet**, daß die Drehachse (6) der Stabilisierungsstange (5) von der Drehachse des Rotors beabstandet ist.

7. Drehflügler nach Anspruch 5, **dadurch gekennzeichnet**, daß der Rotor eine Übersetzungsvorrichtung nach einem der Ansprüche 2 bis 4 umfaßt.

## Claims

1. Rotorcraft having aerofoils mounted on the central member (1) of a rotatable rotor head which form the rotor and whose angle of incidence can be varied in relation to the plane of rotation of the rotor by means of control rods (4), and having a stabilisation rod (5) which is mounted to the rotor head so as to be rotatable about an axis (6) that extends parallel to the axis of incidence of the aerofoil and whose longitudinal axis is aligned parallel to the plane of rotation of the rotor, and having a mixing element to decouple the motion of control rods (4) from stabilisation rod (5) with which aerofoil, control rods (4) and stabilisation rod (5) engage directly or via transmission devices so that the angle of tilt of stabilisation rod (5) against the plane of rotation of the rotor varies the angle of incidence (9) of the aerofoil in the same sense, **wherein** the ratio between the angle of tilt and the change in the angle of incidence is expanded by means of a transmission device.

2. Rotorcraft according to claim 1, **wherein** the mixing element is a mixing lever (8) and said transmission device comprises a shift lever (10), which is connected to central member (1) of the rotor head, stabilisation rod (5) and mixing lever (8) so as to be rotatable.

3. Rotorcraft according to claim 1, **wherein** a gear-wheel or segment of a gearwheel is connected rigidly to the axis of rotation of stabilisation rod (5) and the transmission device is a gear transmission or gear-rack drive.

4. Rotorcraft according to claim 1, **wherein** a sensor that is connected to a control unit records the angle of tilt of stabilisation rod (5) and the control unit effects an adjustment of control rods (4) via actuators.

5. Rotorcraft according to claim 1, **wherein** each aerofoil of the rotor is assigned a stabilisation rod (5), which is affixed so as to be rotatable to a central member (1) of the rotor head about an axis (6) which extends outside the centre of gravity of stabilisation rod (5).

6. Rotorcraft according to claim 5, **wherein** said axis of rotation (6) of stabilisation rod (5) is at a distance to the axis of rotation of the rotor.

7. Rotorcraft according to claim 5, **wherein** said rotor comprises a transmission device according to one of claims 2 to 4.

## Revendications

1. Giravion doté de pales fixées sur la partie centrale (1) d'une tête de rotor, qui forment le rotor et dont l'angle d'incidence est réglable par rapport au plan de rotation du rotor au moyen de barres de commande (4), et d'une barre de stabilisation (5) fixée de manière à pouvoir pivoter autour d'un axe parallèle (6) à l'axe d'incidence de la pale et dont l'axe longitudinal est parallèle au plan de rotation du rotor, ainsi que d'un élément composé servant à désolidariser le mouvement des barres de commande (4) de celui de la barre de stabilisation (5) et que les pales, les barres de commande (4) et la barre de stabilisation (5) actionnent directement ou par l'intermédiaire de dispositifs de transmission de façon à ce que l'angle de basculement de la barre de stabilisation dans le sens opposé au plan de rotation du rotor, modifie l'angle d'incidence (9) de la paie dans le même sens, **caractérisé en ce que** le rapport entre l'angle de basculement et la variation de l'angle d'incidence est augmenté au moyen d'un dispositif de démultiplication.

2. Giravion selon la revendication 1, **caractérisé en ce que** l'élément composé est un levier (8) et en ce que le dispositif de démultiplication comprend un levier de renvoi (10), relié à la pièce centrale du rotor (1), à la barre de stabilisation (5) et au levier composé (8) de façon à pouvoir pivoter.

3. Giravion selon la revendication 1, **caractérisé en ce qu**'une roue dentée ou un segment de roue dentée est solidaire de l'axe de rotation (6) de la barre de stabilisation (5) et en ce que le dispositif de démultiplication est une transmission à engrenages ou à crémaillère.

4. Giravion selon la revendication 1, **caractérisé en ce qu**'un capteur relié à une unité de commande, enregistre l'angle de basculement de la barre de stabilisation (5) et en ce que l'unité de commande règle les barres de commande (4) au moyen d'actionneurs.

5. Giravion selon la revendication 1, **caractérisé en ce qu**'une barre de stabilisation (5) fixée sur la pièce centrale du rotor (1), est affectée à chaque pale du rotor et peut pivoter autour d'un axe (6) situé en-dehors du centre de gravité de la barre de stabilisation.

6. Giravion selon la revendication 5, **caractérisé en ce que** l'axe de rotation (6) de la barre de stabilisation (5) est à une certaine distance de l'axe de rotation du rotor.

7. Giravion selon la revendication 5, **caractérisé en ce que** le rotor renferme un dispositif de démultiplication conforme à l'une des revendications 2 à 4.
